# EUROPÄISCHE PATENTSCHRIFT

(11) **EP 3 597 484 B1**
(45) Veröffentlichungstag und Bekanntmachung des Hinweises auf die Patenterteilung: **28.10.2020**
(21) Anmeldenummer: 18210747.4
(22) Anmeldetag: 06.12.2018
(51) Int. Cl.: B60P 7/14, B62D 33/04

(54) **PERSONENBEFÖRDERUNGSFAHRZEUG**
PASSENGER TRANSPORT VEHICLE
VÉHICULE DE TRANSPORT DES PERSONNES

(30) Priorität: 16.07.2018 EP 18183670
(43) Veröffentlichungstag der Anmeldung: 22.01.2020
(73) Patentinhaber: MAGNA STEYR Fahrzeugtechnik AG & Co KG, 8041 Graz (AT)
(72) Erfinder: ERLACHER, Manuel, 9545 Radenthein (AT); LANGER, Maximilian, 8010 Graz (AT); ZACHNEGGER, Harald, 8041 Graz (AT)
(74) Vertreter: Zangger, Bernd

(56) Entgegenhaltungen:
- EP-A2- 2 065 252
- WO-A1-2011/107289
- JP-A- H05 246 355
- JP-U- 3 175 966
- JP-U- H0 627 460
- US-A- 5 238 282
- US-A1- 2018 050 740

## Beschreibung

### Gebiet der Erfindung

Die vorliegende Erfindung betrifft ein Personenbeförderungsfahrzeug.

### Stand der Technik

Personenbeförderungsfahrzeuge wie zum Beispiel Busse sind an sich bekannt. Sie weisen üblicherweise Anordnungen von Sitzen für Passagiere auf, die die Passagiere in kleineren oder größeren Gruppen gruppieren, zum Beispiel als hintereinanderliegende Doppelsitze oder in Form von vier oder sechs einander zugewandten Sitzen. Üblicherweise ist entlang der Längsachse eines Personenbeförderungsfahrzeugs in der Mitte des Fahrzeuges ein Mittelgang ausgebildet, von dem aus die einzelnen Sitze und Sitzgruppen erreichbar sind.

Die WO 2011/107289 A1 offenbart ein Personenbeförderungsfahrzeug nach dem Oberbegriff von Anspruch 1, und offenbart dabei einen Transporter, insbesondere Lastkraftwagen, Autofähren, Eisenbahnwagen, Omnibus, Anhänger oder dergleichen, für den Transport von Kraftfahrzeugen, umfassend eine Ladefläche zur Aufnahme der Kraftfahrzeuge, wobei der Transporter weiterhin eine Einrichtung zum elektrischen Laden der Kraftfahrzeuge aufweist. Auf einer linken und rechten Seite des Busses in Fahrtrichtung können Türen vorgesehen sein, die den Zugang zu jeweils einem separierten Passagierabteil erlauben.

### Zusammenfassung der Erfindung

Es ist eine Aufgabe der Erfindung, ein Personenbeförderungsfahrzeug anzugeben, das eine verbesserte Privatsphäre der im Personenbeförderungsfahrzeug beförderten Passagiere ermöglicht.

Die Lösung der Aufgabe erfolgt durch ein Personenbeförderungsfahrzeug, umfassend zumindest eine linke Fahrgastzelle mit zumindest einem Passagierplatz, die in Fahrtrichtung links am Fahrzeug angeordnet ist, und zumindest eine rechte Fahrgastzelle mit zumindest einem Passagierplatz, die in Fahrtrichtung rechts am Fahrzeug angeordnet ist, wobei zwischen der linken Fahrgastzelle und der rechten Fahrzeugzelle eine Trennwand in Fahrzeuglängsrichtung verläuft, so dass zumindest in einem Normalzustand der Trennwand ein Zustieg von der linken Fahrgastzelle in die rechte Fahrgastzelle und umgekehrt nicht möglich ist, wobei die linke Fahrgastzelle eine Zugangstür nach außerhalb des Personenbeförderungsfahrzeugs links am Personenbeförderungsfahrzeug aufweist und die rechte Fahrgastzelle eine weitere Zugangstür nach außerhalb des Personenbeförderungsfahrzeugs rechts am Personenbeförderungsfahrzeug aufweist, wobei zumindest eine Trennwand durch einen Passagier zumindest teilweise in eine Halboffenstellung bringbar ist, nämlich ein versenkbarer Teil der Trennwand in einen festen Teil der Trennwand versenkbar ist.

Erfindungsgemäß verfügt ein Personenbeförderungsfahrzeug über Fahrgastzellen, die jede für sich zumindest einen Passagierplatz, insbesondere einen Sitz für einen Passagier, aufweist und die voneinander mittels einer Trennwand getrennt sind. Die Trennwand ist so ausgebildet, dass der Zustieg in eine Fahrgastzelle, beispielsweise die rechte Fahrgastzelle, nicht über eine andere Fahrgastzelle, beispielsweise die linke Fahrgastzelle, erfolgen kann. Deshalb hat jede Fahrgastzelle ihre eigene Außentür, über welche der Zustieg und Ausstieg aus der einzelnen Fahrgastzelle möglich ist. Für Passagiere in einer Fahrgastzelle ergibt sich durch die Abtrennung mittels Trennwänden und autonomen Zustiegs- / Ausstiegsmöglichkeiten ein verbesserter Fahrkomfort und insbesondere eine verbesserte Privatsphäre. Wenn sich mehrere Passagiere innerhalb einer Fahrgastzelle befinden wird die Kommunikation zwischen diesen Passagieren in einer Fahrgastzelle erleichtert. Sichtbarkeit und Mithören der Kommunikation von Passagieren aus anderen Fahrgastzellen können durch die separierten Fahrgastzellen reduziert werden.

Durch die Trennwände ist, zumindest in einem Normalzustand der jeweiligen Trennwand ein Zustieg von der linken Fahrgastzelle in die rechte Fahrgastzelle und umgekehrt nicht möglich. Die Trennwände weisen bevorzugt keine Türen auf.

Erfindungsgemäß ist zumindest eine Trennwand durch einen Passagier zumindest teilweise in eine Halboffenstellung bringbar. Halboffenstellung meint dabei einen Zustand der Trennwand, in welchem die Trennwand zumindest teilweise noch vorhanden ist, so dass der Zutritt von einer Fahrgastzelle in eine durch die halboffene Trennwand getrennte Fahrgastzelle zumindest erschwert oder weiterhin nicht möglich ist, aber zumindest ein Teil der Trennwand geöffnet ist, so dass insbesondere ein Sichtkontakt und verbesserter akustischer Kontakt zwischen den Fahrgastzellen besteht. "Halboffen" ist dabei nicht auf eine Öffnung zur Hälfte, also 50%, eingeschränkt, sondern bedeutet, dass ein Teil der Trennwand bestehen bleibt, während eine anderer Teil der Trennwand geöffnet ist. Erfindungsgemäß kann ein versenkbarer, insbesondere oberer, Teil der Trennwand in einen festen, insbesondere unteren, Teil der Trennwand versenkbar sein.

Das Personenbeförderungsfahrzeug weist bevorzugt keinen Mittelgang auf. Vielmehr verläuft die Trennwand zwischen linker Fahrgastzelle und rechter Fahrgastzelle bevorzugt entlang der Längsmittelachse des Personenbeförderungsfahrzeugs.

Jede Fahrgastzelle weist bevorzugt genau einen Sitz auf. Alternativ können manche oder alle Fahrgastzellen genau zwei Sitze aufweisen. Ein Sitz ist dabei bevorzugt genau für einen Passagier vorgesehen oder für zwei Passagiere vorgesehen.

Das Personenbeförderungsfahrzeug weist vorzugsweise zumindest zwei linke Fahrgastzellen auf und/oder zumindest zwei rechte Fahrgastzellen, wobei jede Fahrgastzelle eine eigene Zugangstür nach außerhalb des Personenbeförderungsfahrzeugs aufweist, wobei zwischen den linken Fahrgastzellen und/oder zwischen den rechten Fahrzeugzellen jeweils eine Trennwand in Fahrzeugquerrichtung verläuft, so dass zumindest in einem Normalzustand des Personenbeförderungsfahrzeugs ein Zustieg von einer linken Fahrgastzelle in die andere linke Fahrgastzelle und/oder von einer rechten Fahrgastzelle in die andere rechte Fahrgastzelle nicht möglich ist.

Das Personenbeförderungsfahrzeug weist daher bevorzugt nicht nur zwei, sondern mehrere, insbesondere vier, sechs, acht oder zehn Fahrgastzellen auf, bevorzugt mindestens sechs Fahrgastzellen, die jeweils ihre eigene Zugangstür, also Außentür zum Zustieg und Ausstieg aus der Fahrgastzelle, aufweisen. Trennwände sind sowohl in Fahrzeuglängsrichtung als auch in Fahrzeugquerrichtung angeordnet. Bevorzugt liegen in Fahrzeugquerrichtung jeweils genau zwei Fahrgastzellen nebeneinander.

Die Trennwände, sowohl in Fahrzeuglängsrichtung als auch gegebenenfalls in Fahrzeugquerrichtung, sind bevorzugt im Normalzustand undurchsichtig und/oder weitgehend schalldicht und/oder erstrecken sich im Wesentlichen über die gesamte vertikale Fläche im Innenraum, reichen also von einem Boden des Personenbeförderungsfahrzeugs bis zu einer Decke des Personenbeförderungsfahrzeugs. Die Trennwände stehen vorzugsweise vertikal im Fahrzeug.

Bevorzugt ist die Position zumindest einer in Fahrzeugquerrichtung ausgerichteten Trennwand in Fahrzeuglängsrichtung verschiebbar und/oder es ist die Position zumindest einer in Fahrzeuglängsrichtung ausgerichteten Trennwand in Fahrzeugquerrichtung verschiebbar. Durch das Verschieben der Trennwände kann die Größe der einzelnen Zellen je nach Bedarf verändert werden. Bevorzugt wird beim Verschieben einer Trennwand zumindest eine Fahrgastzelle größer du dafür zumindest eine andere Fahrgastzelle kleiner.

Vorzugsweise ist der Sitz oder sind die Sitze in einer Fahrgastzelle verschiebbar. Die Verschiebbarkeit der Sitze ist dabei größer als die übliche Verschiebbarkeit von Sitzen im Rahmen einer üblichen Sitzeinstellung. Insbesondere wenn die Trennwände verschiebbar sind können die Sitze dadurch in ihrer Position an eine geänderte Größe oder Geometrie der Fahrgastzelle angepasst werden.

Es kann zumindest eine Trennwand durch einen Passagier zumindest teilweise in einen transparenten Zustand schaltbar sein.

Das Halböffnen und/oder Transparentschalten einer Trennwand kann dabei über eine Steuerschaltung erfolgen. Die Steuerschaltung kann so eingerichtet sein, dass eine Anforderung des Halböffnens und/oder Transparentschaltens einer Trennwand von jeder der beiden durch die Trennwand getrennten Fahrgastzellen möglich ist. Die Steuerschaltung kann so eingerichtet sein, dass das Halböffnen und/oder Transparentschalten einer Trennwand nur dann erfolgt, wenn von beiden durch die Trennwand getrennten Fahrgastzellen eine Anforderung oder Bestätigung des Halböffnens und/oder Transparentschaltens der Trennwand erfolgt ist.

Vorzugsweise umfasst das Personenbeförderungsfahrzeug zumindest eine zusätzliche Fahrgastzelle, die ebenfalls eine eigene Zugangstür nach außerhalb des Personenbeförderungsfahrzeugs aufweist, wie die anderen Fahrgastzellen, und die die als Gepäckabteil, oder als Rollstuhlfahrerabteil, oder als Fahrerkabine, oder als Mehrpersonenabteil ausgebildet ist.

Beispielsweise kann eine Fahrgastzelle einen Sitz umfassen, der in einem hochgeklappten Zustand einen Platz zur Aufnahme eines Rollstuhlfahrers bietet.

Ein Gepäckraum kann unmittelbar neben einem Fahrersitz in einer gemeinsamen Fahrgastzelle angeordnet sein, so dass der Fahrer die Entnahme beobachten bzw. überprüfen kann. Ein Gepäckraum kann zusätzlich oder alternativ mittels Kamera überwacht werden, so dass beispielsweise jeder Passagier auf einem Bildschirm in seiner Fahrgastzelle beobachten kann, wenn Gegenstände von anderen Personen entnommen werden.

Die Zugangstüren können beispielsweise als Einzeltüren, Flügeltüren, Schiebetüren oder Anschlagtüren ausgeführt sein.

### Kurzbeschreibung der Zeichnungen

Die Erfindung wird im Folgenden beispielhaft unter Bezugnahme auf die Zeichnungen beschrieben.
- Fig. 1 bis 4: sind schematische Schnittansichten eines erfindungsgemäßen Personenbeförderungsfahrzeugs in einer ersten Ausführungsform.
- Fig. 5 bis 6: sind schematische Schnittansichten eines erfindungsgemäßen Personenbeförderungsfahrzeugs in einer zweiten Ausführungsform.
- Fig. 7 bis 12: sind schematische Schnittansichten eines erfindungsgemäßen Personenbeförderungsfahrzeugs in einer dritten Ausführungsform.
- Fig. 13 bis 20: sind schematische Schnittansichten von Trennwänden zwischen Fahrgastzellen eines erfindungsgemäßen Personenbeförderungsfahrzeugs in verschiedenen Ausführungsformen und Zuständen.
- Fig. 21: ist ein mögliches Ablaufschema zum Transparentmachen einer Trennwand.
- Fig. 22: ist ein mögliches Ablaufschema zum Öffnen einer Trennwand.

### Detaillierte Beschreibung der Erfindung

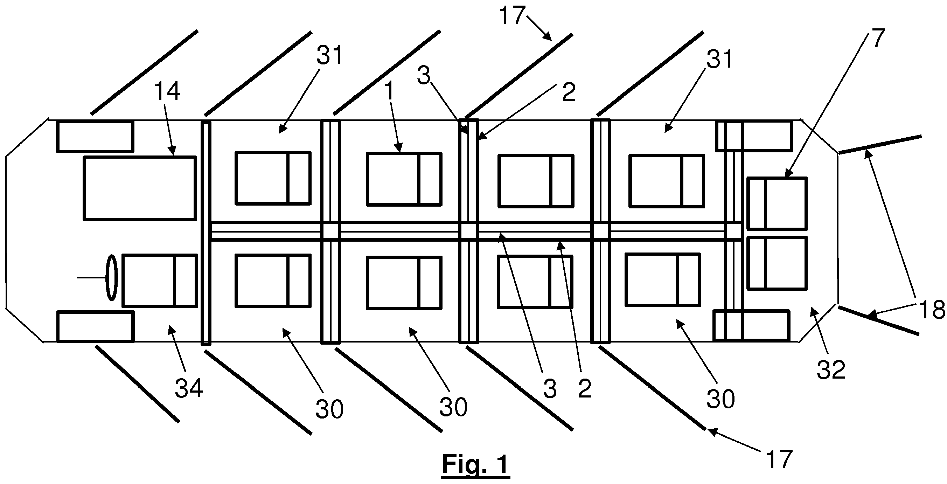

In Fig. 1 ist ein erfindungsgemäßes Personenbeförderungsfahrzeug dargestellt, nämlich ein Bus, der in Österreich der Fahrzeugklasse M2 zugeordnet wäre. Das Personenbeförderungsfahrzeug der Fig. 1 ist für insgesamt zehn Passagiere und einen Fahrer ausgerichtet.

Das Personenbeförderungsfahrzeug umfasst vier linke Fahrgastzellen 30 mit jeweils einem Passagierplatz, nämlich jeweils einem Sitz 1, die in Fahrtrichtung links am Fahrzeug angeordnet sind, und vier rechte Fahrgastzellen 31 mit zumindest einem Passagierplatz, nämlich Sitz 1, die in Fahrtrichtung rechts am Fahrzeug angeordnet sind. Zwischen jeder linken Fahrgastzelle 30 und der jeweils benachbarten rechten Fahrzeugzelle 31 ist jeweils eine Trennwand 2, 3 in Fahrzeuglängsrichtung verlaufend angeordnet, so dass zumindest in einem Normalzustand der Trennwand 2, 3 ein Zustieg von der jeweils linken Fahrgastzelle 30 in die jeweils rechte Fahrgastzelle 31 und umgekehrt nicht möglich ist.

Zwischen den linken Fahrgastzellen 30 und zwischen den rechten Fahrzeugzellen 31 ist jeweils eine Trennwand 2, 3 in Fahrzeugquerrichtung verlaufend angeordnet, so dass zumindest in einem Normalzustand der Trennwand 2, 3 ein Zustieg von einer linken Fahrgastzelle 30 in eine andere linke Fahrgastzelle 30 und von einer rechten Fahrgastzelle 31 in eine andere rechte Fahrgastzelle 31 nicht möglich ist.

Jede linke Fahrgastzelle 30 weist eine Zugangstür nach außerhalb des Personenbeförderungsfahrzeugs links am Personenbeförderungsfahrzeug auf, in Form einer Schwenktür 17, und jede rechte Fahrgastzelle 31 weist eine weitere Zugangstür nach außerhalb des Personenbeförderungsfahrzeugs rechts am Personenbeförderungsfahrzeug auf, ebenfalls in Form einer Schwenktür 17. Jede Fahrgastzelle weist eine eigene Zugangstür auf.

Das Personenbeförderungsfahrzeug weist keinen Mittelgang auf. In der Längsmittelachse des Fahrzeugs ist vielmehr eine durchgehende Trennwand 2, 3 in Fahrzeuglängsrichtung verlaufend angeordnet, die die linken Fahrgastzellen 30 von den rechten Fahrgastzellen 31 trennt.

Jede linke oder rechte Fahrgastzelle 30, 31 weist genau einen Sitz 1 auf.

Am Heck des Personenbeförderungsfahrzeugs ist dieses mit einem Mehrpersonenabteil 32 ausgestattet, dass zwei Klappsitze 7 für Passagiere umfasst. Das Mehrpersonenabteil 32 weist eine Doppeltüre 18 auf, mit Flügeln welche hinten am Fahrzeug nach links bzw. nach rechts geöffnet werden können.

Am vorderen Ende des Personenbeförderungsfahrzeugs weist dieses eine Fahrerkabine 34 auf, die über zwei Zugangstüren in Form von Schwenktüren 17 verfügt. Die Fahrerkabine 34 bildet gleichzeitig ein Gepäckabteil 14, da darin ein Raum für Gepäckstücke zur Verfügung steht.

In der abgebildeten Sitzanordnung sind somit 8 der 10 Sitzplätze 1 über eine eigene Schwenktür bzw. Anschlagtüre 17 zugänglich. Zwei Sitzplätze, nämlich die Klappsitze 7, sind über eine Doppeltüre 18 am Heck des Fahrzeugs zugänglich. Diese Sitzanordnung weist daher Einzeltüren 17 und die Trennwände 2, 3 zwischen den Sitzen 1 auf, wodurch für jeden Passagier ein eigenes Abteil entsteht. Dies bietet bestmögliche Privatsphäre für die Passagiere.

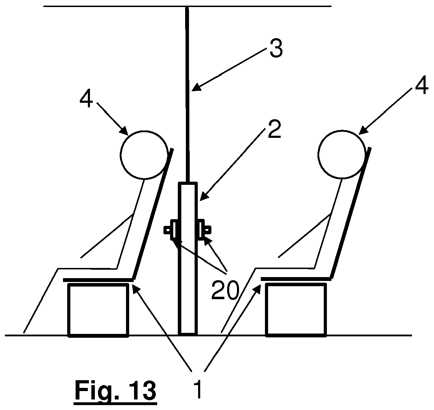

Mögliche Ausführungen der Trennwände 2, 3 sind in den Fig. 13 bis 20 näher dargestellt.

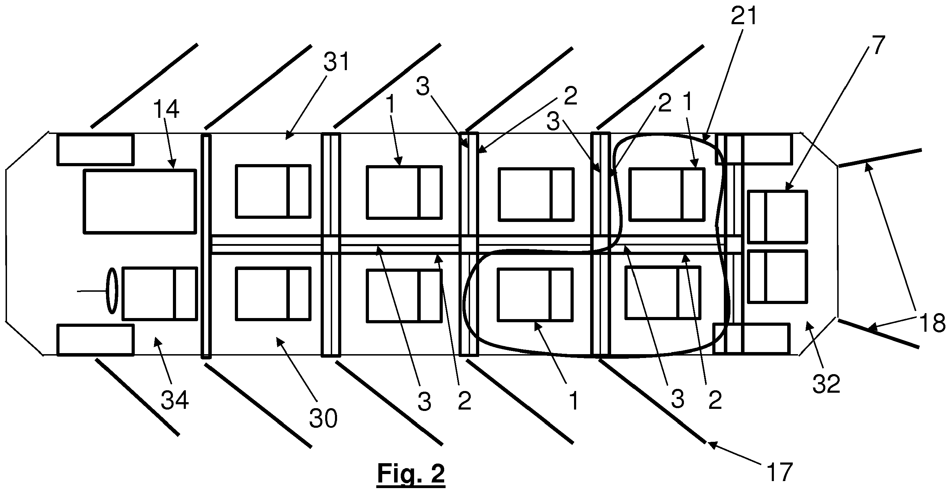

Fig. 2 zeigt schematisch, dass durch individuell versenkbare Trennwände 3, die in jeweils feste Trennwandteile 2 versenkbar sind, und die längs und quer im Fahrzeug verwendet werden, temporär ein gemeinsamer Raum 21 geschaffen werden kann (in Fig. 2 eingekreist), der es ermöglicht das Passagiere aus verschiedenen Fahrgastzellen 30, 31 miteinander interagieren, insbesondere kommunizieren und sich sehen können. Dazu werden die versenkbaren Teile der Trennwände 3 zwischen den betreffenden Fahrgastzellen 30, 31 versenkt.

Beispielsweise könnte ein Buchungsvorgang für ein erfindungsgemäßes Personenbeförderungsfahrzeugs folgendermaßen ablaufen, wenn mehrere Passagiere zusammen Reisen möchten:
Ein Passagier bucht für drei Personen einen Sitzplatz 1. Diesen drei Personen können vom Buchungssystem automatisch 3 Plätze 1 zugewiesen werden, die sich neben und/oder hintereinander befinden. Bevor die Passagiere einsteigen werden die versenkbaren Trennwände 3 zwischen den gebuchten Sitzplätzen 1 heruntergefahren. Wenn die Passagiere einsteigen finden sie bereits einen gemeinsamen Fahrgastraum 21 vor. Jeder der Passagiere kann, wenn er möchte, durch drücken einer Taste 20 (siehe zum Beispiel Fig. 13) die versenkbaren Trennwände 3 zu seiner Fahrgastzelle schließen.

Alternativ ist bei einem Buchungsvorgang auch eine Abfrage aus einer Datenbank möglich: Ist durch die Daten in einer Datenbank bereits bekannt, dass sich Personen die gleichzeitig reisen bereits kennen, können diesen Personen benachbarte Fahrgastzellen zugewiesen werden und die versenkbaren Trennwände 3 automatisch heruntergefahren werden.

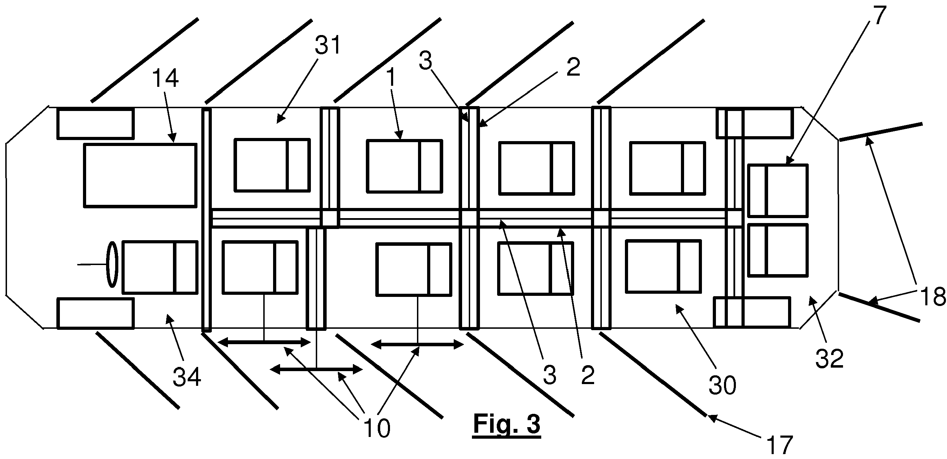

Fig. 3 zeigt ein weiteres Merkmal das in einem erfindungsgemäßen Personenbeförderungsfahrzeug realisiert sein kann: die Trennwände 2, 3 und Sitze 1 können einen gewissen Weg 10 in Längsrichtung verschiebbar sein, um beispielsweise den Komfort für einzelne Fahrgäste zu erhöhen.

Somit kann die Position mancher in Fahrzeugquerrichtung ausgerichteten Trennwände 2, 3 in Fahrzeuglängsrichtung verschiebbar sein und die Position zumindest einer oder auch mehrerer in Fahrzeuglängsrichtung ausgerichteter Trennwände 2, 3 in Fahrzeugquerrichtung verschiebbar sein, ebenso wie die Position von Sitzen 1 in Längs- und/oder Querrichtung verschiebbar sein kann.

Fahrgäste können beim Buchen eines Sitzplatzes den gewünschten Komfort angeben oder wenn sie bereits zugestiegen sind den Freiraum ändern. Die Kosten der Fahrt können sich mit der Höhe des Komforts ändern.

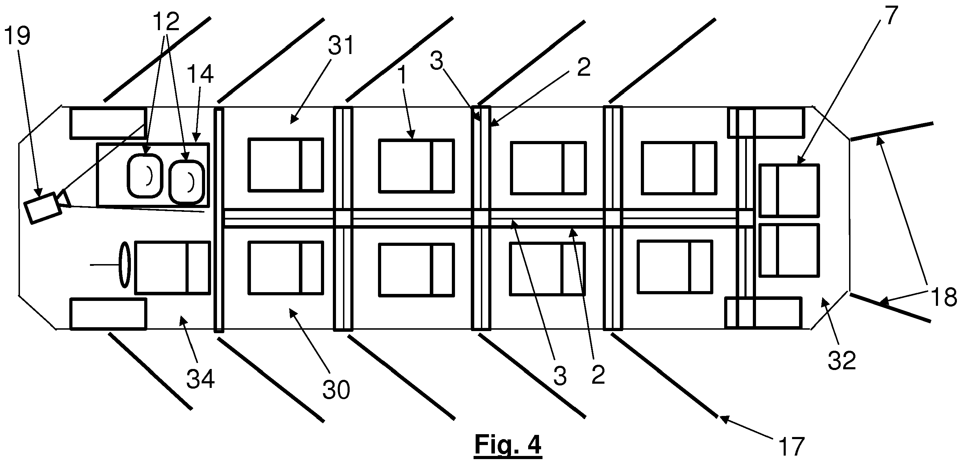

Fig. 4 zeigt wieder eine Sitzanordnung für einen Fahrer und zehn Passagiere des Transport- und Verkehrsmittels, insbesondere Busses. Diese Ausführung weist eine Überwachungskamera 19 in einem Gepäckabteil 14 auf: Wenn ein Passagier ein Gepäckstück 12 bei sich hat, kann er es bei dieser Anordnung in das Gepäckabteil 14 legen bevor er zu seinen Sitz 1 in einer Fahrgastzelle 30, 31 geht. Er erhält dann Zugriff auf die Überwachungskamera 19 im Gepäckabteil 14. Damit kann der Passagier überprüfen ob sein Gepäckstück 12 beim Entnehmen von Gepäckstücken 12 durch andere Passagiere entwendet wird.

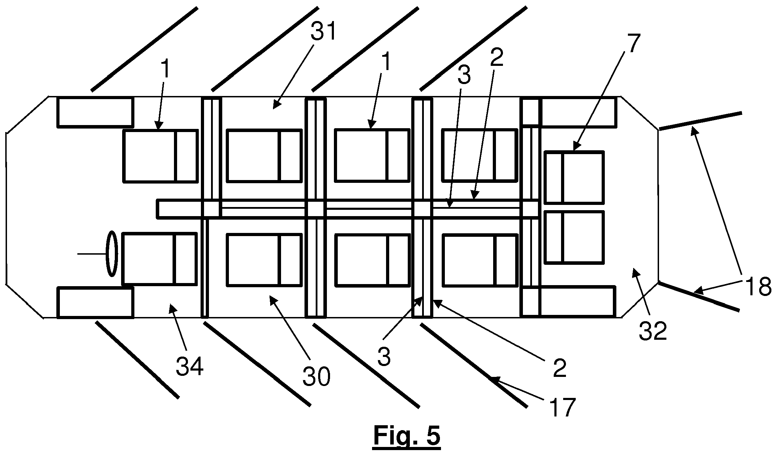

Fig. 5 zeigt einen in der Länge kürzeren Bus, als die Fig. 1 bis 4. Der Bus ist für neun Passagiere und einen Fahrer ausgelegt. Das Personenbeförderungsfahrzeug weist wieder am Heck ein Mehrpersonenabteil 32 mit zwei Sitzen, nämlich zwei Klappsitzen 7, auf und eine Doppeltüre 18. Am vorderen Ende des Personenbeförderungsfahrzeugs weist dieses eine Fahrerkabine 34 auf, die über zwei Zugangstüren in Form von Schwenktüren 17 verfügt. In der Fahrerkabine 34 ist auch ein Sitz 1 für einen Passagier angeordnet.

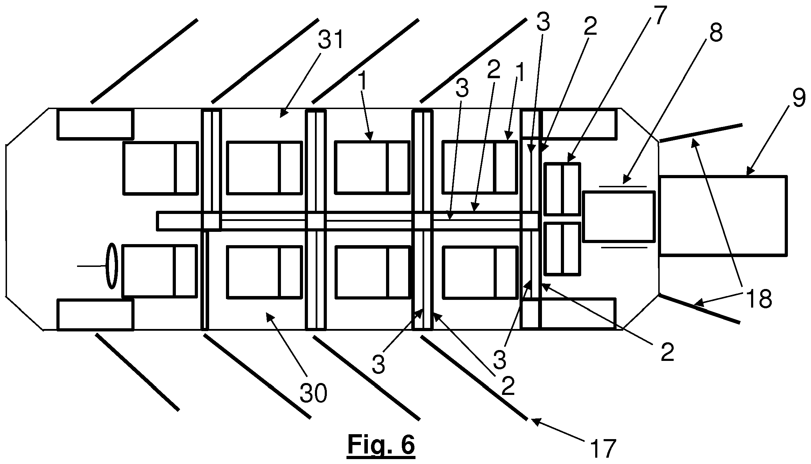

Die Sitzanordnung der Ausführung gemäß Fig. 6 ist für einen Fahrer und 8 Passagiere ausgebildet, davon ein Rollstuhlfahrer. Das Transport- und Verkehrsmittel verfügt über einen Rollstuhlplatz 8, der durch hochklappen der Klappsitze 7 entsteht oder freigegeben wird. Über eine Rollstuhlrampe 9 kann ein Rollstuhlfahrer in die Kabine fahren, zum Rollstuhlplatz 8. Der Rollstuhlfahrer hat durch die Trennwand 2, 3 ebenfalls eine eigene Kabine, die ihm Privatsphäre bietet. Der Rollstuhlfahrer kann mit den Passagieren vor sich interagieren, in dem er die versenkbaren Trennwände 3 herunterfährt.

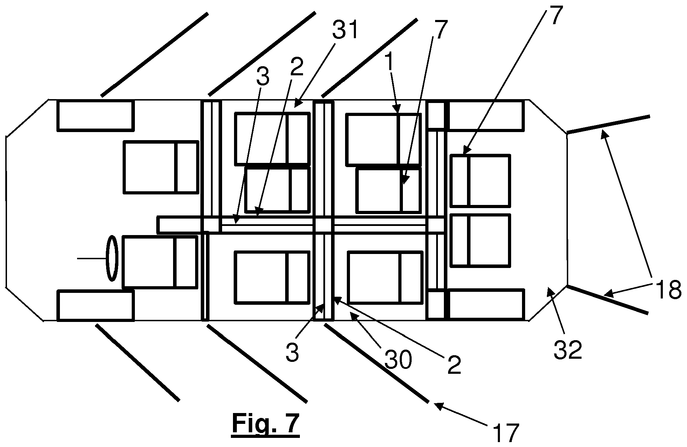

Fig. 7 zeigt wieder eine Sitzanordnung für einen Fahrer und 9 Passagiere. Dieses Personenbeförderungsfahrzeug umfasst Doppelkabinen mit jeweils zwei Sitzen 1 oder Klappsitzen 7 als rechte Fahrgastzellen 31. Solche Doppelkabinen sind beispielswese für paarweise Reisende geeignet. Eine Doppelkabine bietet durch die Trennwände 2, 3 wieder bestmögliche Privatsphäre für jeweils zwei Passagiere.

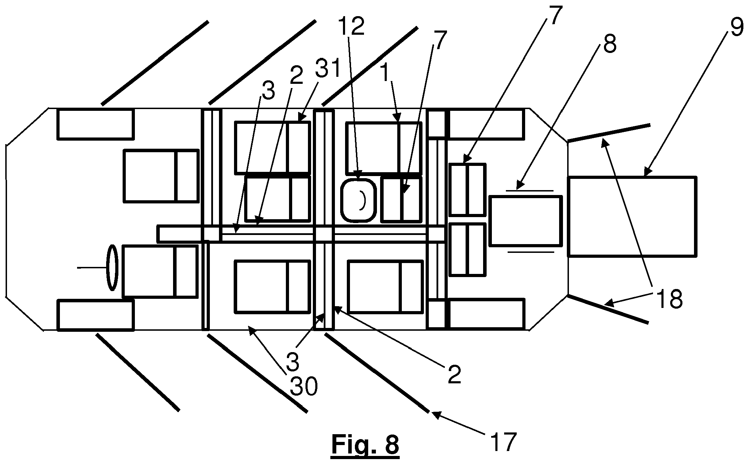

Die Sitzanordnung des Personenbeförderungsfahrzeugs gemäß Fig. 8 bietet Platz für einen Fahrer und sieben Passagiere, davon ein Rollstuhlfahrer, und für ein großes Gepäckstück 12. Der linke Sitz einer Doppelkabine ist als klappbarer Sitz 7 ausgeführt. Durch Hochklappen des Sitzes 7 entsteht Platz für ein großes Gepäckstück 12 des Passagiers, der in dieser Kabine reist. Ein besonderes Merkmal ist, dass der Passagier sein Gepäck 12 jederzeit bei sich hat und beaufsichtigen kann.

Eine derartige Doppelkabine bzw. Sitzplatz mit Gepäcksplatz kann auf folgende Weise gebucht bzw. bereitgestellt werden: Bucht ein Passagier der mit einem großen Gepäckstück 12 reist einen Sitzplatz, kann ihm ein Personenbeförderungsfahrzeug mit der beschriebenen Sitzanordnung bereitgestellt werden. Dabei wird ihm eine Doppelkabine reserviert und automatisch 2 Sitzplätze 1, 7 als belegt markiert.

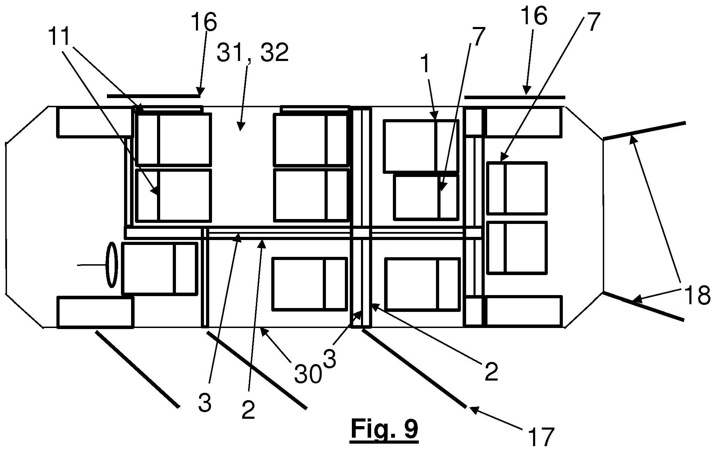

Fig. 9 zeigt eine Sitzanordnung für einen Fahrer und zehn Passagiere. Das Fahrzeug weist eine private Kabine für vier Passagiere als Mehrpersonenabteil 32 auf, das eine rechte Fahrgastzelle 31 bildet und durch eine Schiebetüre 16 betreten werden kann. Zwei der Sitze 11 sind in dieser Kabine gegen die Fahrtrichtung angeordnet. Beispielsweise können Personen die in Gruppen oder mit Gepäck reisen dies in einer Buchungs-Software angeben und können automatisch einer geeigneten Kabine, wie diesem Mehrpersonenabteil 32, zugewiesen werden.

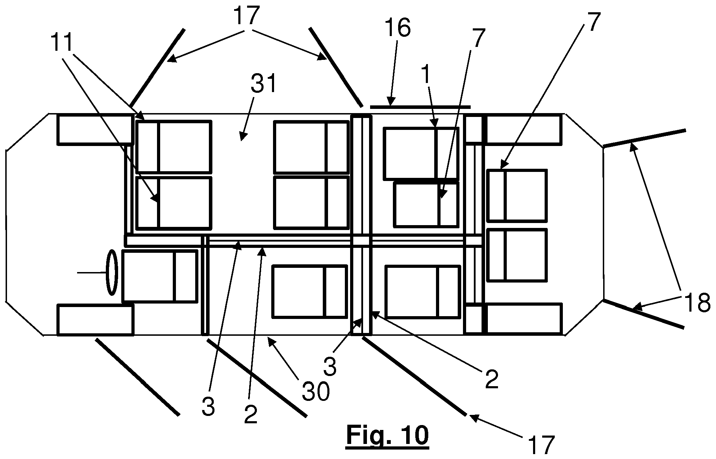

Die Ausführung der Fig. 10 entspricht der Ausführung gemäß Fig. 9, jedoch ist die Kabine für vier Passagiere über zwei Anschlagtüren 17 betretbar.

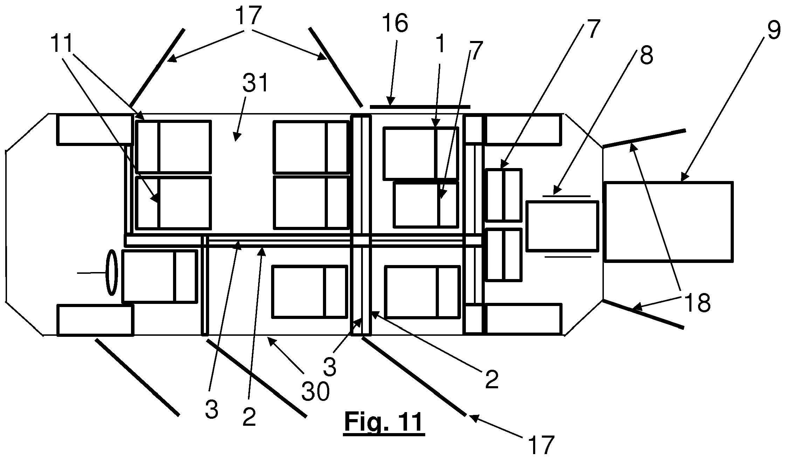

Die Ausführung der Fig. 11 entspricht der Fig. 10, jedoch kombiniert mit einem Rollstuhlplatz 8.

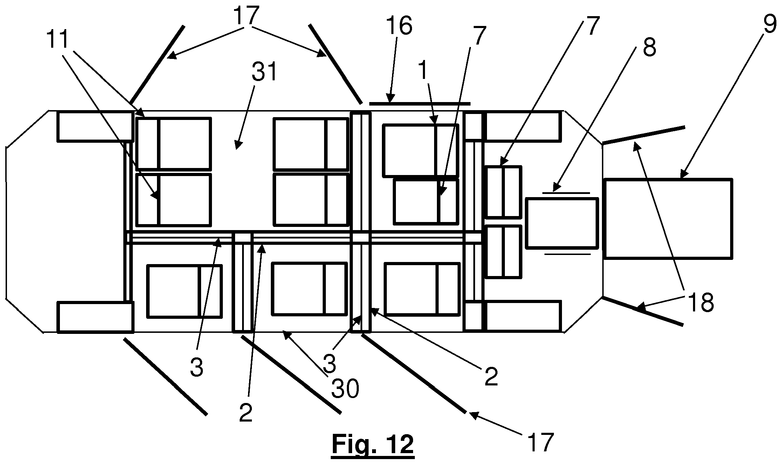

Die Ausführung gemäß Fig. 12 ist schließlich für einen fahrerlosen Betrieb des Personenbeförderungsfahrzeugs geeignet. Das Fahrzeug weist nur Kabinen, also Fahrgastzellen, für Passagiere auf, jedoch keine Fahrerkabine.

In Fig. 13 ist eine mögliche Ausbildung der Trennwände 2, 3 sowohl für die Anordnung in Fahrzeuglängsrichtung als auch in Fahrzeugquerrichtung in einem geschlossenen Zustand bzw. Normalzustand dargestellt. Abgebildet ist eine Anordnung mit einer Trennwand 2, 3 zwischen zwei hintereinander angeordneten Sitzen 1. Die Trennwand 2, 3 hat einen versenkbaren Teil 3 und einen festen Teil 2. Wenn die Trennwand 2, 3 geschlossen ist, hat jeder Passagier 4 eine abgeschlossene Fahrgastkabine bzw. Fahrgastzelle, die über eine außenliegende Tür betreten werden kann (siehe Figuren 1 bis 12). Dadurch hat jeder Passagier 4 die größtmögliche Privatsphäre.

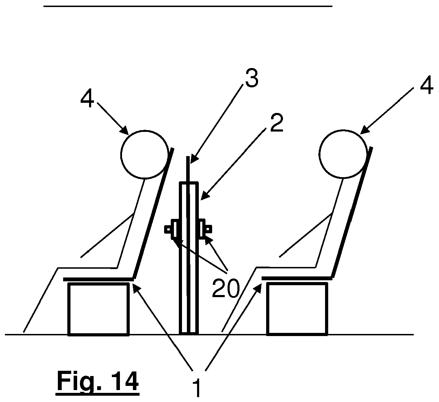

Durch das Herunterfahren des versenkbaren Teils 3 der Trennwand 2, 3 in den festen Teil 2 der Trennwand 2, 3, wie in Fig. 14 dargestellt, der den halboffenen Zustand der Trennwand 2, 3 zeigt, können die Passagiere 4 direkt mit einander interagieren.

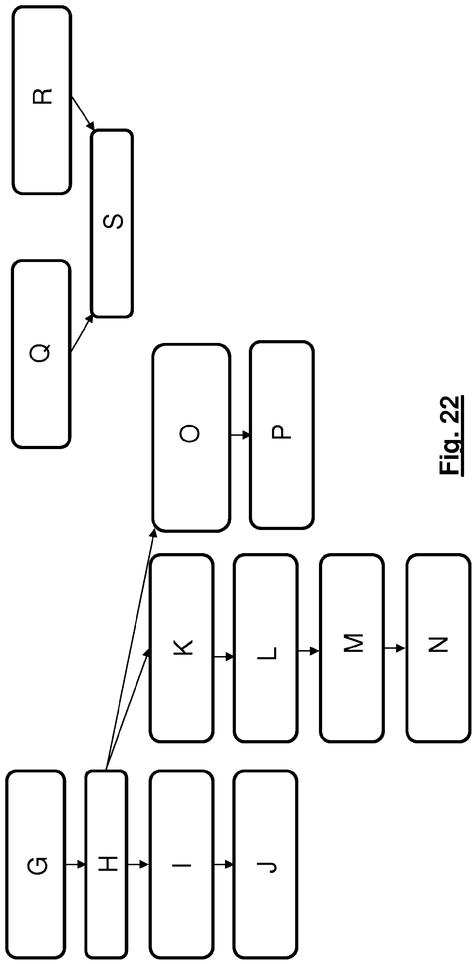

Ein Passagier 4 kann jederzeit durch Drücken einer Taste 20 die Trennwand 2, 3 schließen, also den versenkbaren Teil 3 der Trennwand heben. Das Halböffnen der Trennwand 2, 3 kann ebenso über die Taste 20 durch einen Passagier ermöglicht sein, wobei hierfür ein Verfahren verwendet werden kann wie später - zu Fig. 22 - genauer beschrieben.

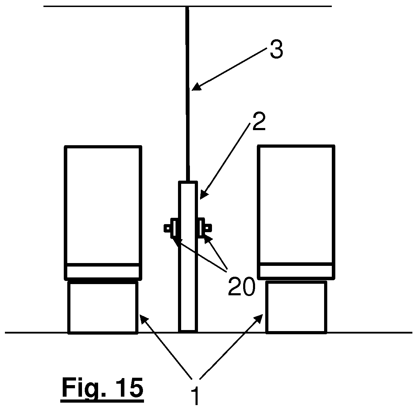

Fig. 15 zeigt eine Anordnung mit einer Trennwand 2, 3 zwischen zwei nebeneinander angeordneten Sitzen 1, also eine Trennwand 2, 3 in Fahrzeuglängsrichtung. Die Trennwand 2, 3 hat wieder einen versenkbaren Teil 3. Wenn die Trennwand 3 geschlossen ist hat jeder Passagier eine abgeschlossene Fahrgastkabine, die über eine außenliegende Tür betreten werden kann.

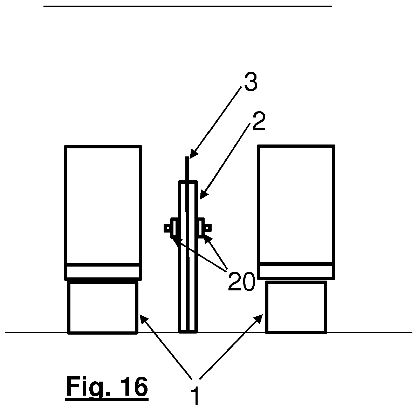

Fig. 16 zeigt das Herunterfahren des versenkbaren Teils 3 der Trennwand 2, 3 gemäß Fig. 15, so dass die Passagiere direkt mit einander interagieren können.

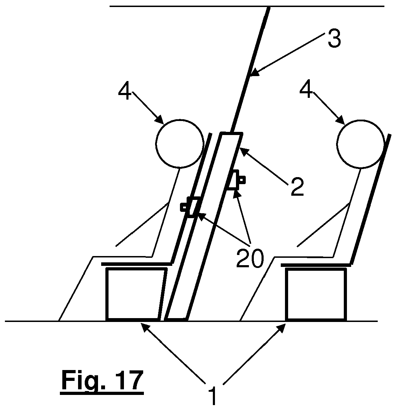

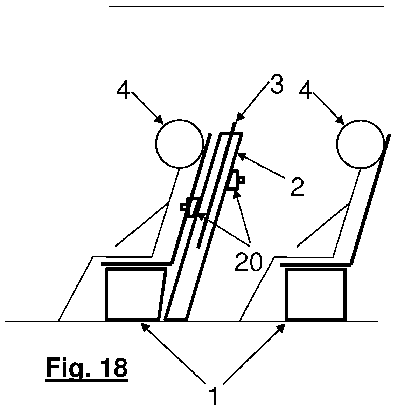

In Fig. 17 ist eine weitere mögliche Variante der Trennwand 2, 3 zwischen zwei hintereinander angeordneten Sitzen 1 dargestellt. Hier ist die Trennwand 2, 3, sowohl der feste als auch der versenkbare Teil der Trennwand 2, 3, geneigt, also schräg ausgebildet, um mehr Fußraum für den hinteren Passagier 4 zu bieten. Fig. 18 zeigt diese schräge Trennwand 2, 3 in einem geöffneten bzw. halbgeöffneten Zustand.

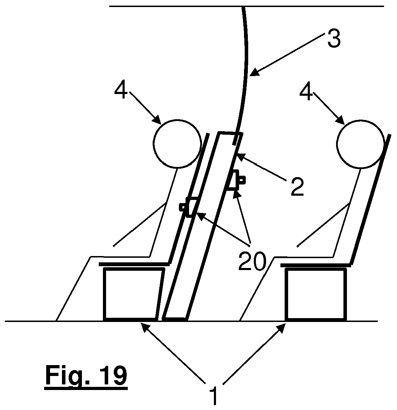

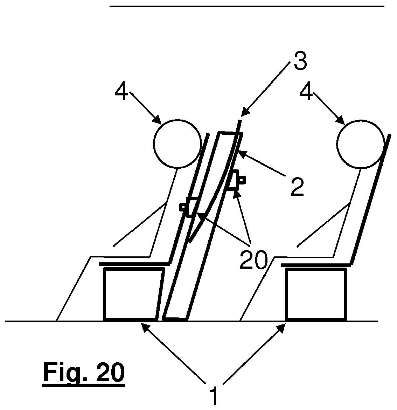

Die Fig. 19 und 20 zeigen in ähnlicher Weise eine weitere mögliche Variante der Trennwand 2, 3 zwischen zwei hintereinander angeordneten Sitzen 1 in geschlossener und halboffener Stellung. Hier ist der feste Teil 2 der Trennwand geneigt, also schräg, um mehr Fußraum für den hinteren Passagier 4 zu bieten. Der versenkbare Teil 3 der Trennwand weist eine Biegung auf, ist also bogenförmig ausgebildet, so dass mehr Freiraum beim Stehen in der Fahrgastkabine erreicht wird.

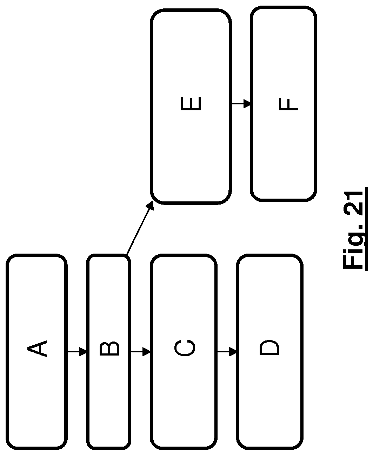

Fig. 21 erläutert einen möglichen Vorgang zum Transparent-machen des versenkbaren Teils 3 einer Trennwand 2, 3:
Wenn ein Passagier 4 den anderen Passagier 4 vor sich sehen möchte kann er eine Taste 20 drücken. Der zweite Passagier 4 kann dann entscheiden ob er darauf reagiert oder nicht. Durch eine transparente Scheibe wird das Raumgefühl verbessert.

Folgende Schritte sind in Fig. 21 dargestellt:
A: Passagier 1 drückt Taste zum transparent machen der Trennwand
B: Passagier 2 wird benachrichtigt
C: Passagier 2 drückt Taste zum transparent machen der Trennwand
D: Trennwand wird transparent
E: Passagier 2 drückt Taste zum transparent machen der Trennwand nicht
F: Trennwand bleibt undurchsichtig

Ein analoges Verfahren kann auch zum Öffnen bzw. Halböffnen einer Trennwand 2, 3 verwendet werden, also insbesondere zum Heben des versenkbaren Teils 3 der Trennwand 2, 3.

Ein möglicher Ablauf zum Herunterfahren und Schließen des versenkbaren Teils 3 einer Trennwand 2, 3, der durch eine Steuereinheit realisiert sein kann, ist in Fig. 22 angegeben:
Wenn ein Passagier 4 mit dem anderen Passagier 4 interagieren möchte, kann er eine Taste 20 drücken. Der zweite Passagier 4 kann dann entscheiden ob er darauf reagiert oder nicht.

Fig. 22 zeigt die Verfahrensschritte:
G: Passagier 1 drückt Taste zum Öffnen der Trennwand
H: Passagier 2 wird benachrichtigt
I: Passagier 2 drückt Taste zum Öffnen der Trennwand
J: Trennwand öffnet sich
K: Passagier 2 drückt Taste zum transparent machen der Trennwand
L: Trennwand wird transparent
M: Passagier 2 drückt Taste zum Öffnen der Trennwand
N: Trennwand öffnet sich
O: Passagier 2 drückt keine Taste
P: Trennwand bleibt undurchsichtig
Q: Passagier 1 drückt Taste zum Schließen der Trennwand
R: Passagier 2 drückt Taste zum Schließen der Trennwand
S: Trennwand schließt sich

### Bezugszeichenliste

- 1: Sitz
- 2: Trennwand, fester Teil
- 3: Trennwand, versenkbarer Teil
- 4: Passagier
- 7: Klappsitz
- 8: Rollstuhlplatz
- 9: Rollstuhlrampe
- 10: Verschiebe-Weg
- 11: gegen die Fahrtrichtung gerichteter Sitz
- 12: Gepäckstück
- 13: Paket
- 14: Gepäckabteil
- 16: Schiebetür
- 17: Schwenktüre
- 18: Doppeltüre
- 19: Überwachungskamera
- 20: Taste
- 21: gemeinsamer Raum
- 30: linke Fahrgastzelle
- 31: rechte Fahrgastzelle
- 32: Mehrpersonenabteil
- 33: Rollstuhlfahrerabteil
- 34: Fahrerkabine

## Patentansprüche

1. Personenbeförderungsfahrzeug, umfassend zumindest eine linke Fahrgastzelle (30) mit zumindest einem Passagierplatz, die in Fahrtrichtung links am Fahrzeug angeordnet ist, und zumindest eine rechte Fahrgastzelle (31) mit zumindest einem Passagierplatz, die in Fahrtrichtung rechts am Fahrzeug angeordnet ist, wobei zwischen der linken Fahrgastzelle (30) und der rechten Fahrzeugzelle (31) eine Trennwand (2, 3) in Fahrzeuglängsrichtung verläuft, so dass zumindest in einem Normalzustand der Trennwand (2, 3) ein Zustieg von der linken Fahrgastzelle (30) in die rechte Fahrgastzelle (31) und umgekehrt nicht möglich ist, wobei die linke Fahrgastzelle (30) eine Zugangstür (16, 17, 18) nach außerhalb des Personenbeförderungsfahrzeugs links am Personenbeförderungsfahrzeug aufweist und die rechte Fahrgastzelle (31) eine Zugangstür (16, 17, 18) nach außerhalb des Personenbeförderungsfahrzeugs rechts am Personenbeförderungsfahrzeug aufweist, **dadurch gekennzeichnet, dass** zumindest eine Trennwand (2, 3) durch einen Passagier (4) zumindest teilweise in eine Halboffenstellung bringbar ist, nämlich ein versenkbarer Teil der Trennwand (3) in einen festen Teil der Trennwand (2) versenkbar ist.

2. Personenbeförderungsfahrzeug nach Anspruch 1,
**dadurch gekennzeichnet, dass** das Personenbeförderungsfahrzeug keinen Mittelgang aufweist.

3. Personenbeförderungsfahrzeug nach zumindest einem der vorhergehenden Ansprüche,
**dadurch gekennzeichnet, dass** jede Fahrgastzelle (30, 31) genau einen Sitz (1) aufweist oder genau zwei Sitze (1) aufweist.

4. Personenbeförderungsfahrzeug nach zumindest einem der vorhergehenden Ansprüche,
**dadurch gekennzeichnet, dass** das Personenbeförderungsfahrzeug zumindest zwei linke Fahrgastzellen (30) aufweist und/oder zumindest zwei rechte Fahrgastzellen (31) aufweist, wobei jede Fahrgastzelle (30, 31) eine eigene Zugangstür (16, 17, 18) nach außerhalb des Personenbeförderungsfahrzeugs aufweist, wobei zwischen den linken Fahrgastzellen (30) und/oder zwischen den rechten Fahrzeugzellen (31) jeweils eine Trennwand (2, 3) in Fahrzeugquerrichtung verläuft, so dass zumindest in einem Normalzustand der Trennwand (2, 3) ein Zustieg von einer linken Fahrgastzelle (30) in die andere linke Fahrgastzelle (30) und/oder von einer rechten Fahrgastzelle (31) in die andere rechte Fahrgastzelle (31) nicht möglich ist.

5. Personenbeförderungsfahrzeug nach zumindest einem der vorhergehenden Ansprüche,
**dadurch gekennzeichnet, dass** die Position zumindest einer in Fahrzeugquerrichtung ausgerichteten Trennwand (2, 3) in Fahrzeuglängsrichtung verschiebbar ist und/oder dass die Position zumindest einer in Fahrzeuglängsrichtung ausgerichteten Trennwand (2, 3) in Fahrzeugquerrichtung verschiebbar ist.

6. Personenbeförderungsfahrzeug nach zumindest einem der vorhergehenden Ansprüche,
**dadurch gekennzeichnet, dass** zumindest eine Trennwand (2, 3) durch einen Passagier zumindest teilweise in einen transparenten Zustand schaltbar ist.

7. Personenbeförderungsfahrzeug nach zumindest einem der vorhergehenden Ansprüche,
**dadurch gekennzeichnet, dass** das Personenbeförderungsfahrzeug zumindest eine zusätzliche Fahrgastzelle aufweist, die eine eigene Zugangstür (16, 17, 18) nach außerhalb des Personenbeförderungsfahrzeugs aufweist, und die als Gepäckabteil (14) ausgebildet ist, oder als Rollstuhlfahrerabteil (33), oder als Fahrerkabine (34), oder als Mehrpersonenabteil (32) ausgebildet ist.

## Claims

1. Passenger transport vehicle comprising at least one left passenger compartment (30) having at least one passenger space which is arranged in the travel direction on the left of the vehicle and at least one right passenger compartment (31) having at least one passenger space which is arranged in the travel direction on the right of the vehicle, wherein between the left passenger compartment (30) and the right passenger compartment (31) a partition wall (2, 3) extends in the longitudinal direction of the vehicle so that, at least in a normal state of the partition wall (2, 3), entry is not possible from the left passenger compartment (30) into the right passenger compartment (31) and vice versa, wherein the left passenger compartment (30) has an access door (16, 17, 18) to the outer side of the passenger transport vehicle on the left of the passenger transport vehicle and the right passenger compartment (31) has an access door (16, 17, 18) to the outer side of the passenger transport vehicle on the right of the passenger transport vehicle, **character**- **ized in that** at least one partition wall (2, 3) can be moved by a passenger (4) at least partially into a half-open position, namely a retractable portion of the partition wall (3) can be retracted into a fixed portion of the partition wall (2).

2. Passenger transport vehicle according to Claim 1,
**characterized in tha**t the passenger transport vehicle has no central aisle.

3. Passenger transport vehicle according to at least one of the preceding claims,
**characterized in that** each passenger compartment (30, 31) has precisely one seat (1) or has precisely two seats (1).

4. Passenger transport vehicle according to at least one of the preceding claims,
**characterized in that** the passenger transport vehicle has at least two left passenger compartments (30) and/or has at least two right passenger compartments (31), wherein each passenger compartment (30, 31) has its own access door (16, 17, 18) to the outer side of the passenger transport vehicle, wherein between the left passenger compartments (30) and/or between the right passenger compartments (31) in each case a partition wall (2, 3) extends in the transverse direction of the vehicle so that at least in a normal state of the partition wall (2, 3) entry from one left passenger compartment (30) into the other left passenger compartment (30) and/or from one right passenger compartment (31) into the other right passenger compartment (31) is not possible.

5. Passenger transport vehicle according to at least one of the preceding claims,
**characterized in that** the position of at least one partition wall (2, 3) which is orientated in the transverse direction of the vehicle can be displaced in the longitudinal direction of the vehicle and/or **in that** the position of at least one partition wall (2, 3) which is orientated in the longitudinal direction of the vehicle can be displaced in the transverse direction of the vehicle.

6. Passenger transport vehicle according to at least one of the preceding claims,
**characterized in that** at least one partition wall (2, 3) can be switched by a passenger at least partially into a transparent state.

7. Passenger transport vehicle according to at least one of the preceding claims,
**characterized in that** the passenger transport vehicle comprises at least one additional passenger compartment which has its own access door (16, 17, 18) to the outer side of the passenger transport vehicle and which is constructed as a luggage compartment (14) or as a wheelchair user compartment (33) or as a driver's cab (34) or as a multi-person compartment (32).

## Revendications

1. Véhicule de transport des personnes, comprenant au moins une cellule passager gauche (30), pourvue d'au moins un siège passager et disposée à gauche dans le véhicule par référence au sens de la marche, et au moins une cellule passager droite (31) pourvue d'au moins un siège passager et disposée à droite dans le véhicule par référence au sens de la marche,
une cloison (2, 3) s'étendant dans la direction longitudinale du véhicule entre la cellule passager gauche (30) et la cellule passager droite du véhicule (31) de sorte que, au moins dans un état normal de la cloison (2, 3), il ne soit pas possible d'accéder à la cellule passager droite (31) depuis la cellule passager gauche (30) et inversement, la cellule passager gauche (30) comportant une porte d'accès (16, 17, 18) donnant sur l'extérieur du véhicule de transport de personnes à gauche dans le véhicule de transport des personnes et la cellule passager droite (31) comportant une porte d'accès (16, 17, 18) donnant sur l'extérieur du véhicule de transport des personnes à droite dans le véhicule de transport des personnes, **caractérisé en ce que** au moins une cloison (2, 3) peut être amenée au moins partiellement dans une position semi-ouverte par un passager (4), c'est-à-dire qu'une partie escamotable de la cloison (3) peut être escamotée jusque dans une partie fixe de la cloison (2).

2. Véhicule de transport des personnes selon la revendication 1,
**caractérisé en ce que** le véhicule de transport de personnes ne comporte pas d'allée centrale.

3. Véhicule de transport des personnes selon l'une au moins des revendications précédentes,
**caractérisé en ce que** chaque cellule passager (30, 31) comporte exactement un siège (1) ou comporte exactement deux sièges (1).

4. Véhicule de transport des personnes selon l'une au moins des revendications précédentes,
**caractérisé en ce que** le véhicule de transport des personnes comporte au moins deux cellules passagers gauches (30) et/ou au moins deux cellules passagers droites (31), chaque cellule passager (30, 31) comportant sa propre porte d'accès (16, 17, 18) donnant sur l'extérieur du véhicule de transport de personnes, une cloison (2, 3) s'étendant dans la direction transversale du véhicule entre les cellules passagers gauches (30) et/ou entre les cellules passagers droites (31) du véhicule de sorte que, au moins dans un état normal de la cloison (2, 3), il n'est pas possible d'accéder à une cellule passager gauche (30) depuis l'autre cellule passager gauche (30) et/ou à une cellule passager droite (31) depuis l'autre cellule passager droite (31).

5. Véhicule de transport des personnes selon l'une au moins des revendications précédentes,
**caractérisé en ce que** la position d'au moins une cloison (2, 3) orientée dans la direction transversale du véhicule est déplaçable dans la direction longitudinale du véhicule et/ou **en ce que** la position d'au moins une cloison (2, 3) orientée dans la direction longitudinale du véhicule est déplaçable dans la direction transversale du véhicule.

6. Véhicule de transport des personnes selon l'une au moins des revendications précédentes,
**caractérisé en ce qu'**au moins une cloison (2, 3) peut être commutée au moins partiellement dans un état transparent par un passager.

7. Véhicule de transport des personnes selon l'une au moins des revendications précédentes,
**caractérisé en ce que** le véhicule de transport des personnes comporte au moins une cellule passager supplémentaire qui comporte sa propre porte d'accès (16, 17, 18) donnant sur l'extérieur du véhicule de transport des personnes et qui est conçue comme un compartiment à bagages (14), ou comme un compartiment pour fauteuil roulant (33), ou comme une cabine de conducteur (34), ou comme un compartiment pour plusieurs personnes (32).
